Europäisches Patentamt

European Patent Office

Office européen des brevets

(19)

(11) Veröffentlichungsnummer: **0 196 404**
**B1**

(12) **EUROPÄISCHE PATENTSCHRIFT**

(45) Veröffentlichungstag der Patentschrift: **04.04.90**

(51) Int. Cl.⁵: **B 62 D 35/00**

(21) Anmeldenummer: **86100337.4**

(22) Anmeldetag: **13.01.86**

(54) **Luftleitvorrichtung am Heck eines Fahrzeuges.**

(30) Priorität: **30.03.85 DE 3511808**

(43) Veröffentlichungstag der Anmeldung:
**08.10.86 Patentblatt 86/41**

(45) Bekanntmachung des Hinweises auf die
Patenterteilung:
**04.04.90 Patentblatt 90/14**

(84) Benannte Vertragsstaaten:
**DE FR GB IT**

(56) Entgegenhaltungen:
**EP-A-0 197 239**
**FR-A-2 240 139**

(73) Patentinhaber: **Dr.Ing.h.c. F. Porsche**
**Aktiengesellschaft**
**Porschestrasse 42**
**D-7000 Stuttgart 40 (DE)**

(72) Erfinder: **Ziegler, Hermann**
**Blumenstrasse 19**
**D-7253 Renningen (DE)**

Courier Press, Leamington Spa, England.

**Beschreibung**

Die Erfindung bezieht sich auf eine Luftleitvorrichtung am Heck eines Fahrzeuges, insbesondere eines Personenwagens, die sich in Fahrzeugquer- und Längsrichtung erstreckt, wobei zumindest ein in Fahrtrichtung gesehen hintenliegender Endbereich der Luftleitvorrichtung unter Bildung eines etwa V-förmigen Spaltes zu einer darunterliegenden Aufbauwand verläuft.

Eine bekannte Luftleitvorrichtung der eingangs genannten Gattung (DE—U—72 40 740) ist an einer Aufbauwand befestigt, wobei ein hinterer Endbereich der Luftleitvorrichtung von der Aufbauwand weggeführt ist und diese abschnittsweise überragt. Die der Aufbauwand zugekehrte Seite des hinteren Endbereiches verläuft etwa im rechten Winkel zur Aufbauwand.

Bei Fahrzeugen mit derartig ausgebildeten Luftleitvorrichtungen hat sich in nachteiliger Weise gezeigt, daß beim Durchfahren einer bestimmten Gattung von automatischen Waschanlagen entweder Beschädigungen an der Luftleitvorrichtung auftreten oder daß die Waschbürste durch den Konturverlauf der Aufbauwand und der Luftleitvorrichtung festgesetzt wird. In letzterem Zustand schaltet die Waschanlage selbsttätig ab, ohne den Waschvorgang zu beenden. Solche Störungen treten insbesondere bei Waschanlagen auf, wo der Waschorgang durch eine Vorlaufphase und eine Rücklaufphase der Waschbürsten erfolgt und die Waschbürste in jeder der beiden Phasen jeweils nur in einer einzigen Richtung bewegbar ist.

Aufgabe der Erfindung ist es, eine Luftleitvorrichtung am Heck eines Fahrzeuges so zu gestalten, daß weder die Luftleitvorrichtung beschädigt noch die Waschanlage unerwünscht außer Betrieb gesetzt wird.

Erfindungsgemäß wird diese Aufgabe durch die kennzeichnenden Merkmale des Anspruchs 1 gelöst. Weitere, die Erfindung in vorteilhafter Weise ausgestaltende Markmale beinhalten die Unteransprüche.

Die mit der Erfindung hauptsächlich erzielten Vorteile sind darin zu sehen, daß durch die schwenkbare Ausgestaltung des hinteren Abschnittes der Luftleitvorrichtung beim Durchfahren einer automatischen Waschanlage einerseits Beschädigungen an der Luftleitvorrichtung vermieden werden und daß sich andererseits die Waschanlage nicht während des Waschvorganges selbsttätig abstellt. Denn die Waschbürste wird von unten gegen den hinteren Abschnitt der Luftleitvorrichtung gedrückt, worauf dieser nach oben und nach vorne in eine widerstandsreduzierende Lage geschwenkt wird, so daß stets eine Vorwärtsbewegung der Waschbürste gewährleistet ist. Nach Passieren der Waschbürste wird der hintere Abschnitt durch die Rückholeinrichtung selbsttätig in seine Betriebsstellung zurückgeführt. Eine an der Luftleitvorrichtung ausgebildete Arretiereinrichtung sorgt dafür, daß der hintere Abschnitt erst ab einer definierten Krafteinwirkung verschwenkbar ist;

bei fahrbahnbedingten Stößen verbleibt er in seiner vorgesehen Lage. Durch die Anordnung eines Filmgelenkscharniers zwischen dem feststehenden und dem schwenkbaren Abschnitt weist die Luftleitvorrichtung einen einfachen Aufbau auf.

Ein Ausführungsbeispiel der Erfindung ist in der Zeichnung dargestellt und wird nachfolgend näher erläutert.

Es zeigt

Fig. 1 eine Schrägansicht von hinten auf den Heckbereich eines Personenwagens mit einer Luftleitvorrichtung,

Fig. 2 eine Teildraufsicht auf die Luftleitvorrichtung,

Fig. 3 einen Schnitt nach der Linie III—III der Fig. 2,

Fig. 4 einen Schnitt nach der Linie IV—IV der Fig. 2,

Fig. 5 einen Schnitt nach der Linie V—V der Fig. 2,

Fig. 6 einen Schnitt nach der Linie VI—VI der Fig. 2,

Fig. 7 einen Schnitt nach der Linie VII—VII der Fig. 6,

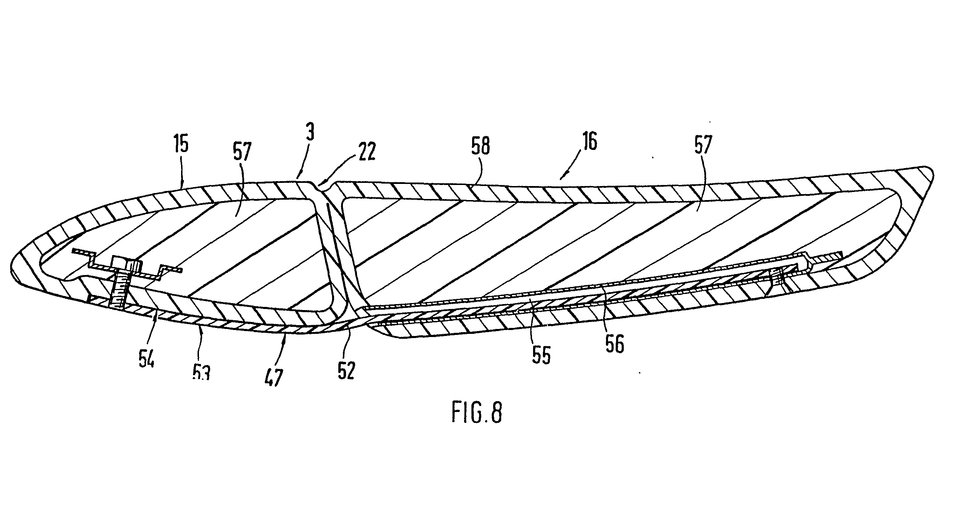

Fig. 8 eine Ansicht entsprechend Fig. 4 mit einer zweiten Ausführungsform einer Rückholeinrichtung,

Fig. 9 einen Schnitt nach der Linie IX—IX der Fig. 2,

Fig. 10 eine Einzelheit X der Fig. 6 in größerem Maßstab.

Ein Personenwagen 1 weist im Heck 2 eine Luftleitvorrichtung 3 auf, die sich in Fahrzeugquerrichtung über einen wesentlichen Teil der Fahrzeugbreite erstreckt.

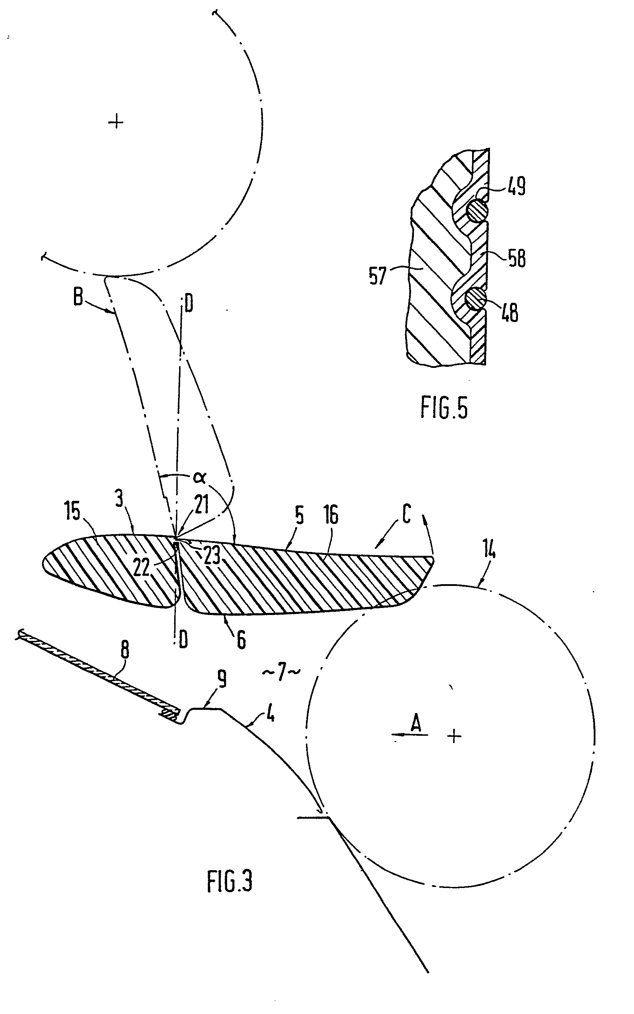

Gemäß Fig. 3 verläuft die im Querschnitt tragflügelartig ausgebildete Luftleitvorrichtung 3 abschnittsweise mit Abstand zu einer darunterliegenden Aufbauwand 4. Eine Oberseite 5 und eine Unterseite 6 der Luftleitvorrichtung 3 sind etwa horizontal ausgerichtet, wogegen die Aufbauwand 4 zum hinteren Fahrzeugende hin nach Art eines Fließhecks schräg nach unten abfällt.

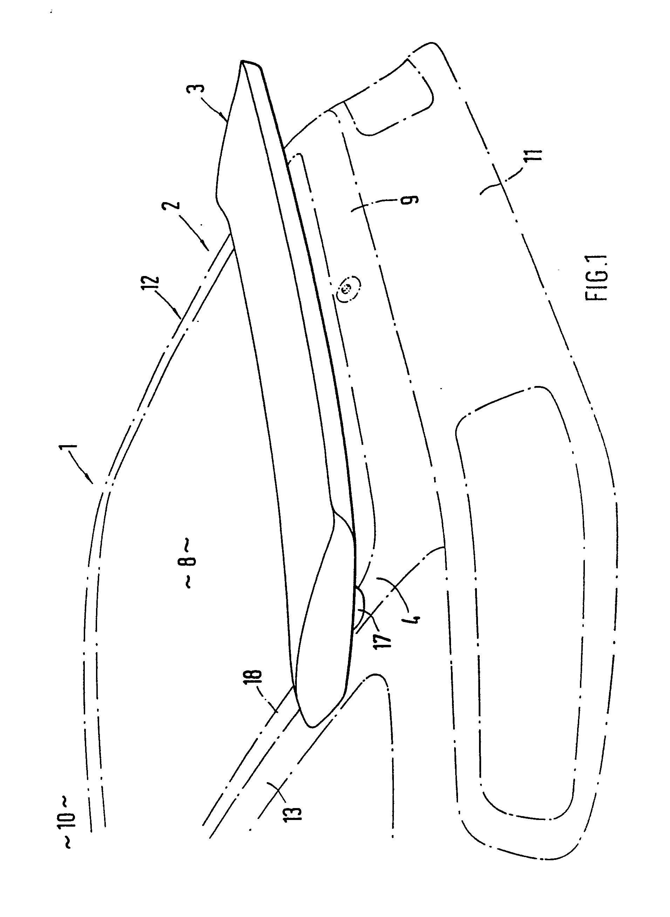

Zwischen der einen konvexen Formverlauf aufweisenden Unterseite 6 der Luftleitvorrichtung 3 und der Aufbauwand 4 erstreckt sich ein etwa V-förmiger Spalt 7. Die Aufbauwand 4 wird im Ausführungsbeispiel durch eine mit einer Heckscheibe 8 versehene Heckklappe 9 gebildet. Die Heckklappe 9 ist oben an ein Dach 10, unten an ein aus elastischem Werkstoff hergestelltes Endteil 11 und an den beiden Längsseiten an Seitenteile 12, 13 angeschlossen (Fig. 1).

Damit beim Durchfahren einer automatischen Waschanlage eine um eine horizontale Querachse gelagerte Waschbürste 14 bei ihrer Bewegung in Fahrtrichtung A nicht im V-förmigen Spalt 7 zwischen Unterseite 6 und Aufbauwand 4 festgesetzt wird, umfaßt die Luftleitvorrichtung 3 einen—in Fahrtrichtung gesehen—feststehenden vorderen Abschnitt 15 und einen schwenkbaren hinteren Abschnitt 16. Letzterer ist unter Einwirkung der sich in Fahrtrichtung A bewegenden Waschbürste nach oben in eine widerstandsreduzierende Lage B verschwenkbar. Bei in Lage B befindlichem hinteren Abschnitt 16 kann die Waschbürste 14 ungehindert in Fahrtrichtung A bewegt werden.

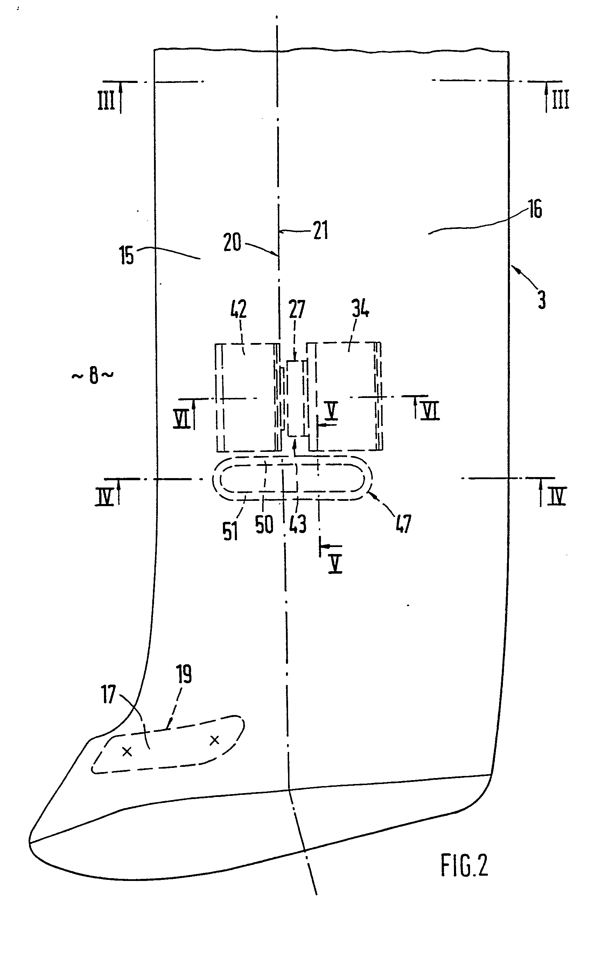

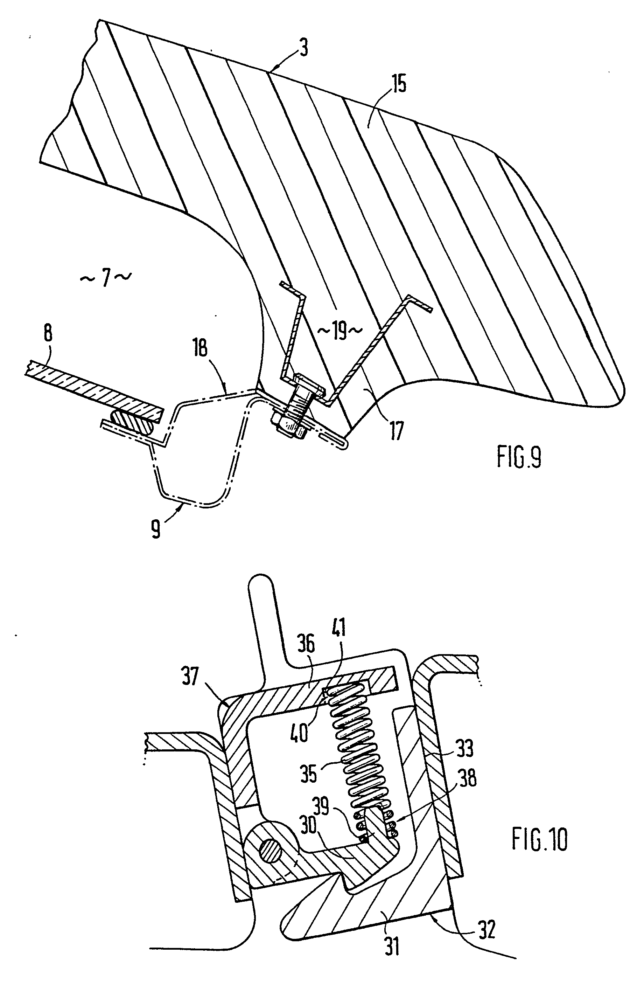

Der schwenkbare Abschnitt 16 nimmt in seiner Betriebsstellung C eine etwa horizontale Lage ein und überragt, in Längsrichtung gesehen, die Heckklappe 9 und einen Teilbereich des Endteiles 11. Am feststehenden vorderen Abschnitt 15 der Luftleitvorrichtung 3 sind zwei Stützabschnitte 17 vorgesehen, die an seitliche Rahmenteile 18 der Heckklappe 9 herangeführt und zur Befestigung der Luftleitvorrichtung 3 mit Schrauben, Gewinden, Bolzen oder dergleichen versehen sind. Jeder Stützabschnitt 17 ist in einem seitlich außenliegenden Bereich 19 der Luftleitvorrichtung 3 angeordnet (Fig. 2 und 9).

Zur Verbindung der Abschnitte 16, 17 ist zumindest ein Scharnier 20 vorgesehen, dessen Drehachse 21 etwa horizontal ausgerichtet ist und sich in Fahrzeugquerrichtung erstreckt. Gemäß Fig. 2 verläuft das Scharnier 20 über die gesamte Breite der Luftleitvorrichtung 3. Es besteht aber auch die Möglichkeit, nur örtlich an einigen Stellen der Breite der Luftleitvorrichtung 3 Scharniere 20 vorzusehen.

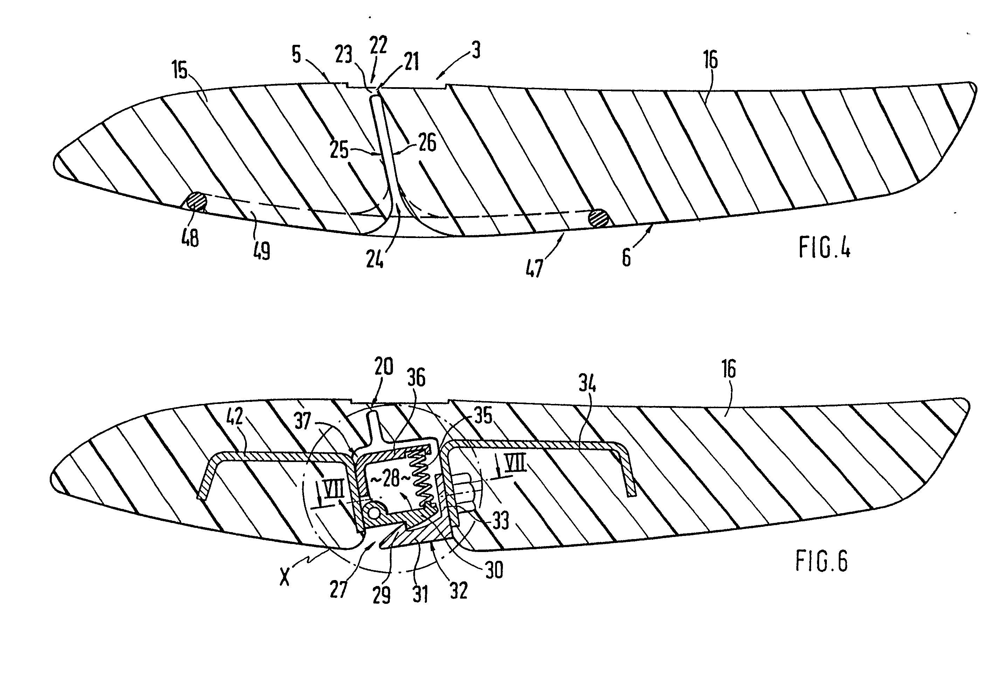

Ein besonders einfacher Aufbau der Luftleitvorrichtung 3 wird dadurch erzielt, daß das Scharnier 20 als Filmgelenkscharnier 22 ausgebildet ist, d.h., der vordere Abschnitt 15 ist mit dem hinteren Abschnitt 16 über einen dünnwandigen, elastischen Steg 23 verbunden. Unterhalb des Steges 23 ist ein nach unten hin offener, schmaler Spalt 24 vorgesehen, dessen Formverlauf durch schräg gerichtete Wandabschnitte 25, 26 der Abschnitte 15, 16 festgelegt ist. Der Steg 23 ist benachbart der Oberseite 5 der Luftleitvorrichtung 3 angeordnet. Selbstverständlich könnte auch jedes andere, durch ein separates Bauteil gebildete Scharnier aus Kunststoff oder Metall Verwendung finden, dessen eine Scharnierhälfte mit dem feststehenden Abschnitt 15 und dessen andere Scharnierhälfte mit dem schwenkbaren Abschnitt 16 verbunden ist (nicht dargestellt). Wie Fig. 4 zeigt, weist der hintere Abschnitt 16 eine wesentlich größere Länge auf als der vordere Abschnitt 15.

Der hintere Abschnitt 16 der Luftleitvorrichtung 3 wird durch die Waschbürste 14 um einen Winkel α größer 90° in Fahrtrichtung A bewegt, so daß der Abschnitt 16 über eine vertikale Ebene D—D hinaus nach vorne verschwenkt wird. Im Ausführungsbeispiel beträgt der Schwenkwinkel α etwa 110° (Fig. 3).

Um Schwenkbewegungen des Abschnittes 16 im Fahrbetrieb—beispielsweise durch Straßenunebenheiten—zu verhindern, ist zwischen dem Abschnitt 15 und dem Abschnitt 16 eine Arretiereinrichtung 27 vorgesehen. Die Arretiereinrichtung 27 ist in einer Nische 28 der Luftleitvorrichtung 3 angeordnet, und zwar unterhalb des Scharniers 20. Gemäß Fig. 6 umfaßt die Arretiereinrichtung 27 ein am hinteren Abschnitt 16 angeordnetes, hakenförmiges Stützglied 29, das mit einem korrespondierenden, beweglichen Stützglied 30 des feststehenden Abschnittes 15 zusammenwirkt.

Das Stützglied 29 ist einstückig mit einem etwa horizontal ausgerichteten Schenkel 31 einer Lagerplatte 32 ausgebildet. Der andere Schenkel 33 der Lagerplatte 32 ist mittels Schrauben an einer eingebetteten Verstärkungseinlage 34 des schwenkbaren Abschnitts 16 befestigt.

Das Stützglied 30 wird mittels einer Druckfeder 35 gegen das Stützglied 29 gespannt. Die Druckfeder 35 ist etwa vertikal ausgerichtet und erstreckt sich zwischen dem Stützglied 30 und einem Wandabschnitt 36 eines Stützprofils 37. Ein Ende 38 der Druckfeder 35 umgibt einen Fixierzapen 39 des Stützgliedes 30, wogegen des andere Ende 40 in eine kreisförmige Ausnehmung 41 des Stützprofils 37 hineinragt (Fig. 10).

Das winkelförmige Stützprofil 37 ist mittels Schrauben an einer Verstärkungseinlage 42 des feststehenden Abschnittes 15 befestigt.

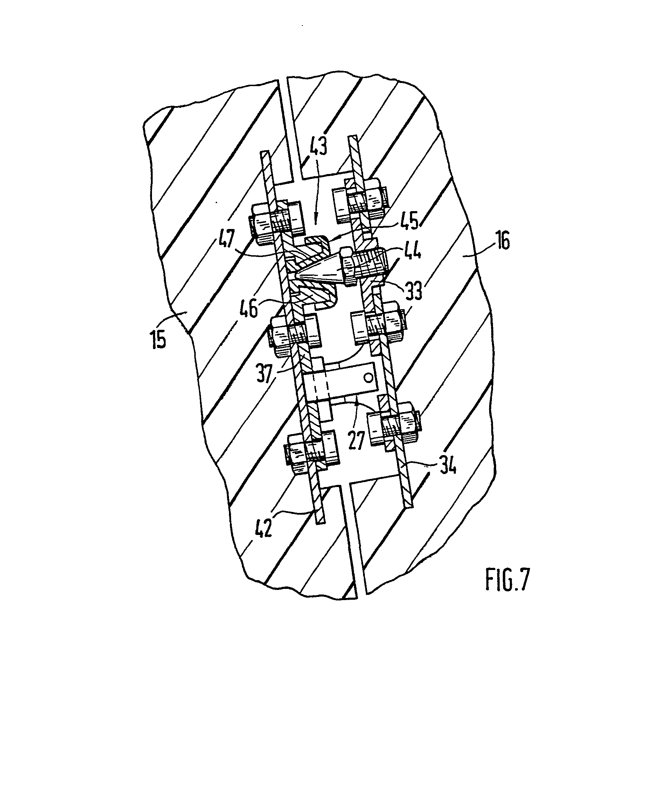

Neben der Arretiereinrichtung 27 ist eine Zentriereinrichtung 43 vorgesehen, die sich aus einem kegelförmigen Zentrierstift 44 und einer korrespondierenden Aufnahme 45 zusammensetzt. Nach Fig. 7 ist die Zentriereinrichtung 43 seitlich neben der Arretiereinrichtung 27 angeordnet, wobei der Zentrierstift 44 dem schwenkbaren Abschnitt 16 und die Aufnahme 45 dem feststehenden Abschnitt 15 zugeordnet ist. Die Aufnahme 45 umfaßt einen Grundkörper 46, in den eine Tülle 47 aus elastischem Werkstoff (Gummi, Kunststoff) einklipsbar ist. Das Stützprofil 37 und der Grundkörper 46 sind einstückig ausgebildet.

Ferner ist zwischen dem schwenkbaren Abschnitt 16 und dem feststehenden Abschnitt 15 eine Rückholeinrichtung 47 vorgesehen, wodurch nach Passieren der Waschbürste 14 der schwenkbare Abschnitt 16 selbsttätig in seine Betriebsstellung zurückgeführt wird. Die Rückholeinrichtung 47 wird gemäß einer ersten Ausführungsform durch einen geschlossenen Ring 48 aus elastischem Werkstoff gebildet, der in eine rillenförmige Vertiefung 49 an der Unterseite 6 der Luftleitvorrichtung 3 einsetzbar ist. Die Vertiefung 49 ist sowohl am feststehenden als auch am schwenkbaren Abschnitt 15, 16 vorgesehen.

Die Rückholeinrichtung 47 ist im Ausführungsbeispiel angrenzend an die Arretiereinrichtung 27 angeordnet. Die beiden Längsseiten 49, 50 des eine ovale Form aufweisenden Ringes 48 erstrecken sich in Fahrzeuglängsrichtung.

Bei einer zweiten Ausführungsform wird die Rückholeinrichtung 47 durch ein elastisches Zugband 52 gebildet, des einerseits mit dem feststehenden Abschnitt 15 und andererseits mit dem schwenkbaren Abschnitt 16 verbunden ist. Ein vorderer Abschnitt 53 des streifenförmigen Zugbandes 52 verläuft an der dem Scharnier 20 gegenüberliegenden Außenseite 54 des feststehenden Abschnittes 15, wogegen ein anschließender Abschnitt des Zugbandes 52 innerhalb eines Hohlraumes 55 eines eingebetteten Versteifungselementes 56 verlegt und am hinteren Ende des Verstärkungselementes 56 befestigt ist, beispielsweise durch Vernieten.

Sowohl der vordere Abschnitt 15 als auch der hintere Abschnitt 16 der Luftleitvorrichtung 3 weisen einen Hartschaumkern 57 auf, der allseitig mit einer dünnwandigen, weichen Schaumauflage 58 umgeben ist.

## Patentansprüche

1. Luftleitvorrichtung (3) am Heck eines Fahrzeuges, insbesondere eines Personenwagens (1), die sich in Fahrzeugquer- und Längsrichtung erstreckt, wobei zumindest ein in Fahrtrichtung gesehen, hintenliegender Endbereich (16) der Luftleitvorrichtung (3) unter Bildung eines etwa V-förmigen Spaltes (7) zu einer darunterliegenden Aufbauwand (4) verläuft, dadurch gekennzeichnet, daß die Luftleitvorrichtung (3) durch einen feststehenden vorderen Abschnitt (15) und einen schwenkbaren hinteren Abschnitt (16) gebildet wird, wobei der hintere Abschnitt (16) unter Einwirkung einer sich in Fahrtrichtung (A) bewegenden, horizontal gelagerten Waschbürste (14) einer Aschanlage nach oben und nach vorne in eine widerstandsreduzierende Lage (B) verschwenkbar ist.

2. Luftleitvorrichtung nach Anspruch 1, dadurch gekennzeichnet, daß der feststehende Abschnitt (15) unter Vermittlung von zwei mit Abstand zueinander angeordnet Stützelementen (17) an die Aufbauwand (4) herangeführt und an dieser befestigt ist.

3. Luftleitvorrichtung nach Anspruch 1, dadurch gekennzeichnet, daß zwischen dem feststehenden Abschnitt (15) und dem schwenkbaren Abschnitt (16) zumindest ein Scharnier (20) vorgesehen ist, dessen Drehachse (21) in Fahrzeugquerrichtung und etwa horizontal verläuft.

4. Luftleitvorrichtung nach Anspruch 1, dadurch gekennzeichnet, daß das Scharnier (20) als Filmgelenkscharnier (22) ausgebildet ist.

5. Luftleitvorrichtung nach Anspruch 1, dadurch gekennzeichnet, daß der schwenkbare Abschnitt (16) um einen Winkel α größer 90° in Fahrtrichtung (A) verschwenkbar ist, dergestalt, daß der Abschnitt (16) über eine vertikale Ebene (D—D) hinaus nach vorne bewegt wird.

6. Luftleitvorrichtung nach Anspruch 3, dadurch gekennzeichnet, daß die Drehachse (21) des Scharniers (20) benachbart einer Oberseite (5) der Luftleitvorrichtung (3) verläuft.

7. Luftleitvorrichtung nach Anspruch 1, dadurch gekennzeichnet, daß der schwenkbare Abschnitt (16) der Luftleitvorrichtung (3) mittels einer ausrückbaren Arretiereinrichtung (27) in Lage gehalten ist.

8. Luftleitvorrichtung nach Anspruch 7, dadurch gekennzeichnet, daß die Arretiereinrichtung (27) durch ein am schwenkbaren Abschnitt (16) angeordnetes, hakenförmiges Stützglied (29) gebildet wird, das mit einem korrespondierenden, beweglichen Stützglied (30) des feststehenden Abschnitts (15) zusammenwirkt, wobei das bewegliche Stützglied (30) durch eine Druckfeder (35) beaufschlagt ist.

9. Luftleitvorrichtung nach Anspruch 8, dadurch gekennzeichnet, daß die Arretiereinrichtung (27) verdeckt in einer Nische (28) der Luftleitvorrichtung (3) angeordnet ist.

10. Luftleitvorrichtung nach den Ansprüchen 7 und 8, dadurch gekennzeichnet, daß neben der Arretiereinrichtung (27) eine Zentriereinrichtung (43) vorgesehen ist, die einen kegelförmigen Zentrierstift (44) und eine korrespondierende Aufnahme (45) umfaßt.

11. Luftleitvorrichtung nach Anspruch 10, dadurch gekennzeichnet, daß die Aufnahme (45) durch einen Grundkörper (46) und eine einklipsbare Tülle (45) aus elastischem Werkstoff gebildet wird.

12. Luftleitvorrichtung nach Anspruch 1, dadurch gekennzeichnet, daß - zwischem dem schwenkbaren Abschnitt (16) und dem feststehenden Abschnitt (15) eine Rückholeinrichtung (47) wirksam ist.

13. Luftleitvorrichtung nach Anspruch 12, dadurch gekennzeichnet, daß die Rückholeinrichtung (47) durch ein elastisches Zugband (52) gebildet wird, aus unterhalb des Scharniers (20) angeordnet ist und sich zwischen dem feststehenden Abschnitt (15) und dem schwenkbaren Abschnitt (16) erstreckt.

14. Luftleitvorrichtung nach Anspruch 13, dadurch gekennzeichnet, daß das Zugband (52) an der dem Scharnier (20) gegenüberliegenden Außenseite (54) des feststehenden Abschnittes (15) verläuft, wogegen es im Bereich des schwenkbaren Abschnitt (16) innerhalb eines Hohlraumes (55) eines Verstärkungselementes (56) verlegt ist und benachbart einem in Fahrtrichtung gesehen hintenliegenden Ende des Verstärkungselementes (56) an diesem befestigt ist.

15. Luftleitvorrichtung nach Anspruch 12, dadurch gekennzeichnet, daß die Rückholeinrichtung (47) durch einen geschlossenen elastischen Ring (48) gebildet wird, der in eine rillenförmige Vertiefung (49) an der Unterseite (5) der Luftleitvorrichtung (3) eingesetzt ist, wobei der Ring (48) im Querschnitt kreisförmig ausgebildet ist.

## Revendications

1. Dispositif de guidage d'air (3) à l'arrière d'un véhicule automobile, en particulier d'une voiture de tourisme (1), qui s'étend transversalement et longitudinalement au véhicule, une zone terminale (16) au moins du dispositif de guidage d'air (3), située à l'arrière vu dans le sens de la marche, s'étendant de manière à former une fente (7) à peu près en V par rapport à une paroi de carrosserie (4) située au-dessous, caractérisé en ce que le dispositif de guidage d'air (3) est formé par une portion (15) avant fixe et une portion arrière (16) pivotante, la portion arrière (16) pouvant pivoter vers le haut et vers l'avant, dans une position B réduisant la résistance, sous l'effet d'une brosse de lavage (14) d'une installation de lavage, montée horizontalement et se déplaçant dans le sens de la marche A.

2. Dispositif de guidage d'air selon la revendication 1, caractérisé en ce que la portion (15) fixe est rapprochée de la paroi de carrosserie (4) et fixée sur celle-ci par l'intermédiaire de deux éléments d'appui (17) espacés l'un de l'autre.

3. Dispositif de guidage d'air selon la revendication 1, caractérisé en ce qu'il est prévu entre la portion fixe (15) et la portion pivotante (16) au moins une charnière (20) dont l'axe de rotation (21) s'étend transversalement au véhicule et à peu près horizontalement.

4. Dispositif de guidage d'air selon la revendication 1, caractérisé en ce que la charnière (20) est une charnière d'articulation en film (22).

5. Dispositif de guidage d'air selon la revendication 1, caractérisé en ce que la portion pivotante (16) pivote dans le sens de la marche A, d'un angle α supérieur à 90° de manière que la portion (16) se déplace vers l'avant au-delà d'un plan vertical D—D.

6. Dispositif de guidage d'air selon la revendication 3, caractérisé en ce que l'axe de rotation (21) de la charnière (20) s'étend à proximité d'une face supérieure (5) du dispositif de guidage d'air (3).

7. Dispositif de guidage d'air selon la revendication 1, caractérisé en ce que la portion pivotante (16) du dispositif de guidage d'air (3) est maintenue en position au moyen d'un dispositif de blocage (27) déverrouillable.

8. Dispositif de guidage d'air selon la revendication 7, caractérisé en ce que le dispositif de blocage (27) est formé par un organe d'appui (29) en forme de crochet, placé sur la portion (16), lequel organe d'appui coopère avec un organe de soutien (30) mobile correspondant de la portion fixe (15), l'organe de soutien mobile (30) étant soumis à l'action d'un ressort de pression (35).

9. Dispositif de guidage d'air selon la revendication 8, caractérisé en ce que le dispositif de blocage (27) est dissimulé dans une niche (28) du dispositif de guidage d'air (3).

10. Dispositif de guidage d'air selon les revendications 7 et 8, caractérisé en ce qu'il est prévu, outre le dispositif de blocage (27), un dispositif de centrage (43) qui comprend un doigt de centrage (44) conique et un logement (45) correspondant.

11. Dispositif de guidage d'air selon la revendication 10, caractérisé en ce que le logement (45) est formé par un corps de base (46) et par une douille (47) clipsable en matière élastique.

12. Dispositif de guidage d'air selon la revendication 1, caractérisé en ce qu'un dispositif de rappel (47) agit entre la portion pivotante (16) et la portion fixe (15).

13. Dispositif de guidage d'air selon la revendication 12, caractérisé en ce que le dispositif de rappel (47) est formé par une bande de traction (52) élastique qui est placée au-dessous de la charnière (20) et qui s'étend entre la portion fixe (15) et la portion pivotante (16).

14. Dispositif de guidage d'air selon la revendication 13, caractérisé en ce que la bande de traction (52) s'étend sur la face extérieure (54) de la portion fixe (15), opposée à la charnière (20), tandis que dans la zone de la portion pivotante (16), elle est placée à l'intérieur d'une cavité (55) d'un élément de renfort (56) et est fixée sur cet élément de renfort, à proximité d'une extrémité de l'élément de renfort (56), située à l'arrière, vue dans le sens de la marche.

15. Dispositif de guidage d'air selon la revendication 12, caractérisé en ce que le dispositif de rappel (47) est formé par un anneau élastique (48) fermé qui est placé dans un creux (49) en forme de rainure sur la face inférieure (5) du dispositif de guidage d'air (3), l'anneau (48) étant de section transversale circulaire.

**Claims**

1. A rear spoiler (3) of a vehicle, in particular a passenger car (1), extending in the transverse and longitudinal directions of the vehicle, at least one end region (16) of the spoiler (3) extending rearwardly of the direction of travel over a bodywork wall (4) situated thereunder so as to form an approximately V-shaped gap (7), characterized in that the spoiler (3) is formed by a stationary front portion (15) and a pivotable rear portion (16), the rear portion (16) being pivotable upwards and forwards into a resistance-reducing position (B) by the action of a washing brush (14) of a washing installation mounted horizontally and moving in the direction of travel (A).

2. A spoiler according to Claim 1, characterized in that with the interposition of two support elements (17) arranged at a distance from each other the stationary portion (15) is brought up to the bodywork wall (4) and is secured thereto.

3. A spoiler according to Claim 1, characterized in that at least one hinge (20), the pivot axis (21) of which extends in the transverse direction of the vehicle and is approximately horizontal, is provided between the stationary portion (15) and the pivotable portion (16).

4. A spoiler according to Claim 1, characterized in that the hinge (20) is constructed as an integral hinge (22).

5. A spoiler according to Claim 1, characterized in that the pivotable portion (16) is pivotable about an angle α greater [than] 90° in the direction of travel (A), in such a way that the portion (16) is moved forward beyond a vertical plane (D—D).

6. A spoiler according to Claim 3, characterized in that the pivot axis (21) of hinge (20) extends adjacent a top side (8) of the spoiler (3).

7. A spoiler according to Claim 1, characterized in that the pivotable portion (16) of the spoiler (3) is held in position by means of a disengageable locking device (27).

8. A spoiler according to Claim 7, characterized in that the locking device (27) is formed by a hook-shaped support member (29) mounted on the pivotable portion (16) and which cooperates with a corresponding movable support member (30) of the stationary portion (15), the movable support member (30) being acted upon by a compression spring (35).

9. A spoiler according to Claim 8, characterized in that the locking device (27) is arranged covered in a recess (28) in the spoiler (3).

10. A spoiler according to Claims 7 and 8, characterized in that in addition to the locking device (27) a centring device (43) is provided comprising a tapered centring pin (44) and corresponding receiving means (45).

11. A spoiler according to Claim 10, characterized in that the receiving means (45) is formed by a base member (46) and a socket (47) of resilient material which can be clipped on.

12. A spoiler according to Claim 1, characterized in that a returning device (47) is operatively connected between the pivotal portion (16) and the stationary portion (15).

13. A spoiler according to Claim 12, characterized in that the returning device (47) is formed by a resilient tension band (52) which is arranged below the hinge (20) and which extends between the stationary portion (15) and the pivotable portion (16).

14. A spoiler according to Claim 13, characterized in that the tension band (52) extends on the outside (54) of the stationary portion (15) opposite the hinge (20), whereas it is positioned in the region of the pivotable portion (16) inside a cavity (55) of a reinforcement element (56) and is secured to the reinforcement element (56) adjacent an end thereof towards the rear as viewed in the direction of travel.

15. A spoiler according to Claim 12, characterized in that the returning device (47) is formed by a continuous resilient ring (48) inserted in a groove-shaped depression (49) on the underside (5) of the spoiler (3), the ring (48) being circular in cross-section.

FIG.1

FIG.2

B

D

α

21

15  3

22  23

5  16  C

D

6

8

9

~7~

4

A

14

FIG.3

49

58

57

48

FIG.5

FIG.4

FIG.6

EP 0 196 404 B1

FIG.7

FIG.8

EP 0 196 404 B1

FIG.9

FIG.10

7